# EUROPEAN PATENT APPLICATION

(11) **EP 2 811 408 A1**
(43) Date of publication of application: **10.12.2014**
(21) Application number: 12867248.2
(22) Date of filing: 30.01.2012
(51) Int. Cl.: G06F 12/00

(54) **DATA MANAGEMENT DEVICE, DATA MANAGEMENT METHOD, DATA MANAGEMENT PROGRAM, AND INFORMATION PROCESSING DEVICE**

(71) Applicant: Fujitsu Limited, Kawasaki-shi, Kanagawa 211-8588 (JP)
(72) Inventor: KOBASHI, Hiromichi, Kawasaki-shi Kanagawa 211-8588 (JP); TSUCHIMOTO, Yuichi, Kawasaki-shi Kanagawa 211-8588 (JP)
(74) Representative: Hoffmann Eitle
(86) International application number: PCT/JP2012/052011
(87) International publication number: WO 2013/114538

(57) **Abstract**

A data management device includes a first storage unit configured to store data; a second storage unit configured to store data, to which access is possible at a high speed compared to the first storage unit; an input output management unit configured to read, from the first storage unit or the second storage unit, data according to an input data request, and output the read data; an analysis unit configured to analyze relevance between data items stored in the first storage unit or the second storage unit, based on history of data requests that have been input to the input output management unit, and divide, into groups, the data items stored in the first storage unit or the second storage unit based on a result of the analysis; and a management unit configured to store, in the second storage unit, the data items in units of the groups into which the data items have been divided by the analysis unit.

## Description

### TECHNICAL FIELD

The present invention is related to a data management device, a data management method, a data management program, and an information processing device.

### BACKGROUND ART

Conventionally, there is known a document list display method performed by a document processing system including a low-speed storage device and a high-speed storage device. This method is for providing a management table for managing which storage device each document data item is stored in, and referring to the management table to check whether the document data, which is specified in a document list information request from the user, is stored in either the low-speed storage device or the high-speed storage device. Furthermore, this method is for displaying a list of requested document data in which the data is distinguished by different storage devices, and then copying the details of the document data stored in the low-speed storage device in the list of document data, into a high-speed storage device, in parallel with the process of displaying details of particular document data.

### Prior Art

### Patent document

Patent Document 1: Japanese Laid-Open Patent Publication No. H7-319902

### Disclosure of the Invention

### Problems to be Solved by the Invention

However, in the above conventional method, the document data that is specified in document list information is merely copied into the high-speed storage device each time, and therefore there are cases where the speed of outputting data is not sufficiently increased.

According to one aspect, an objective of the present invention is to provide a data management device capable of outputting the requested data at high speed.

### MEANS TO SOLVE THE PROBLEMS

According to an embodiment of the present invention for achieving the above objective, a data management device includes
a first storage unit configured to store data;
a second storage unit configured to store data, to which access is possible at a high speed compared to the first storage unit;
an input output management unit configured to read, from the first storage unit or the second storage unit, data according to an input data request, and output the read data;
an analysis unit configured to analyze relevance between data items stored in the first storage unit or the second storage unit, based on history of data requests that have been input to the input output management unit, and divide, into groups, the data items stored in the first storage unit or the second storage unit based on a result of the analysis; and
a management unit configured to store, in the second storage unit, the data items in units of the groups into which the data items have been divided by the analysis unit.

### EFFECTS OF THE INVENTION

According to an embodiment, a data management device is provided, which is capable of outputting the requested data at high speed.

### BRIEF DESCRIPTION OF DRAWINGS

FIG. 1 illustrates a hardware configuration example of a data management device 1 according to a first embodiment of the present invention.
FIG. 2 illustrates a functional configuration example of the data management device 1 according to the first embodiment of the present invention.
FIG. 3 illustrates a state where a data request Rq is made to the data management device 1.
FIG. 4 illustrates a state in which a data request Rq is made to the data management device 1, after the state of FIG. 3.
FIG. 5 illustrates a state in which a data request Rq is made to the data management device 1, after the state of FIG. 4.
FIG. 6 is an example of a flowchart indicating the flow of a relevance analysis process executed by the relevance analysis unit 23.
FIG. 7 illustrates segment arrangements before and after the relevance analysis unit 23 changes the segments in the state of FIG. 5.
FIG. 8 illustrates a segment arrangement after the change has been made by the segment arrangement unit 24.
FIG. 9 illustrates a state when data requests Rq have been made to the data management device 1 a plural number of times, after the state of FIG. 8.
FIG. 10 illustrates a state when a data request Rq has been made to the data management device 1, after the state of FIG. 9.
FIG. 11 illustrates the segment arrangement before and after the relevance analysis unit 23 determines the segments in the state of FIG. 10.
FIG. 12 is an example of a flowchart that indicates the flow of a process executed by the data management device 1.
FIG. 13 schematically illustrates how a process is performed by a reference method in a non-dispersive data management device.
FIG. 14 schematically illustrates how a process is performed on the data A, B by the data management device 1 according to the first embodiment.
FIG. 15 illustrates a hardware configuration example of a data management device 2 according to a second embodiment of the present invention.
FIG. 16 illustrates a functional configuration example of the data management device 2 according to the second embodiment of the present invention.
FIG. 17 illustrates a state where a data request Rq is made to the data management device 2.
FIG. 18 illustrates a state in which a data request Rq is made to the data management device 2, after the state of FIG. 17.
FIG. 19 illustrates a state in which a data request Rq is made to the data management device 2, after the state of FIG. 18.
FIG. 20 illustrates a segment arrangement after being changed by the segment arrangement unit 24#2.
FIG. 21 illustrates a state when data requests Rq have been made to the data management device 2 a plural number of times, after the state of FIG. 20.
FIG. 22 illustrates a state when a data request Rq has been made to the data management device 2, after the state of FIG. 21.
FIG. 23 is an example of a flowchart that indicates the flow of a process executed by each node 10 of the data management device 2.
FIG. 24 schematically illustrates how a process is performed by the reference method in a dispersive data management device.
FIG. 25 schematically illustrates how a process is performed on the data A, B by the data management device 2 according to the second embodiment.

### MODES FOR CARRYING OUT THE INVENTION

In the following, with respect to a mode for carrying out the present invention, a description is given by citing embodiments with reference to accompanying drawings.

### [Embodiments]

### <First Embodiment>

In the following, with reference to drawings, a description is given of a data management device, a data management method, a data management program, and an information processing device according to a first embodiment of the present invention.

### (Hardware Configuration)

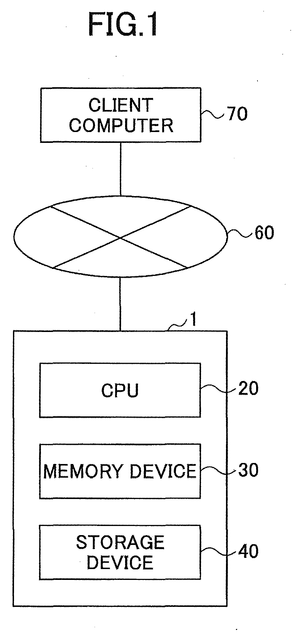

FIG. 1 illustrates a hardware configuration example of a data management device 1 according to the first embodiment of the present invention. The data management device 1 is a non-dispersive data management device having a mode as illustrated. For example, the data management device 1 includes a CPU (Central Processing Unit) 20, a memory device 30, and a storage device 40. Furthermore, the data management device 1 is connected to a client computer 70, which is an example of an information processing device, via a network 60.

The CPU 20 is a processor acting as an arithmetic processing unit including, for example, a program counter, an instruction decoder, various computing units, an LSU (Load Store Unit), and a general-purpose register, etc.

The memory device 30 is a storage device that may be accessed at high speed compared to the storage device 40. As a combination of the memory device 30 and the storage device 40, the following combinations of a RAM (Random Access Memory), a flash memory, a HDD (Hard Disk Drive), etc., may be used.
- memory device 30: RAM - storage device 40: HDD
- memory device 30: RAM - storage device 40: flash memory
- memory device 30: RAM - storage device 40: tape
- memory device 30: RAM - storage device 40: DVD
- memory device 30: RAM - storage device 40: CD
- memory device 30: RAM - storage device 40: Blu-ray (registered trademark) Disc
- memory device 30: flash memory - storage device 40: HDD
- memory device 30: flash memory - storage device 40: tape
- memory device 30: flash memory - storage device 40: DVD
- memory device 30: flash memory - storage device 40: CD
- memory device 30: flash memory - storage device 40: Blu-ray Disc

The storage device 40 stores data provided by the data management device 1 in units of segments. A segment is a group of data acknowledged as having relevance based on the history of data requests, and as described below, the contents of the segment are updated by processes by the CPU 20.

In the memory device 30, for example, a segment that is highly frequently accessed, among the segments stored in the storage device 40, is copied from the storage device 40. Accordingly, the data management device 1 is able to output data at high speed in response to an input data request.

The data management device 1 includes a ROM storing BIOS, a program memory, etc., in addition to the above configuration. The program executed by the CPU 20 may be acquired via the network 60 or may be acquired by inserting a portable memory in the data management device 1.

### (Functional Configuration)

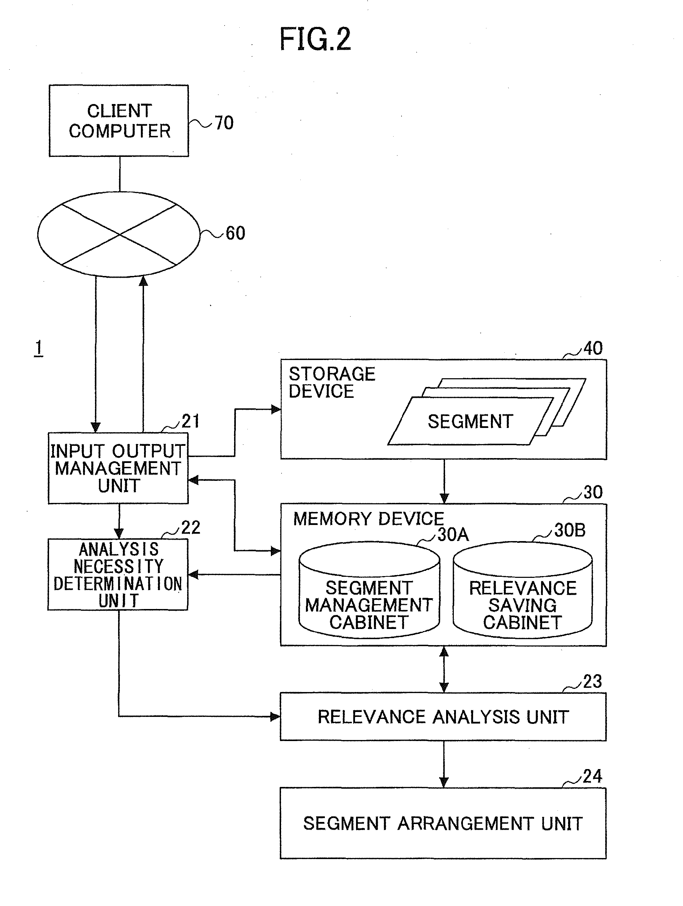

FIG. 2 illustrates a functional configuration example of the data management device 1 according to the first embodiment of the present invention. The data management device 1 includes, as function units that function as programs are executed by the CPU 20, an input output management unit 21, an analysis necessity determination unit 22, a relevance analysis unit 23, and a segment arrangement unit 24.

The input output management unit 21 searches the memory device 30 and the storage device 40 in response to a data request input from a request source such as the client computer 70, and sends the requested data to the request source. Note that the data request is not only sent by the client computer 70; there may be cases where the entity of the a process, etc., being executed in the data management device 1, is the issue source of the data request. Furthermore, if an input output device is connected to the data management device 1, there may be cases where the user inputs a data request in the input output device.

When the data request is input, the input output management unit 21 first searches the memory device 30, and when there is data specified by the data request in the memory device 30, the input output management unit 21 reads the data from the memory device 30 and returns the data to the request source. Furthermore, when there is no data specified by the data request in the memory device 30, the input output management unit 21 searches the storage device 40, and when there is data specified by the data request in the memory device 40, the input output management unit 21 reads the data from the memory device 40 and returns the data to the request source. At this time, the input output management unit 21 copies the segment to which the read data belongs from the storage device 40 to a segment management cabinet 30A of the memory device 30.

Note that the input output management unit 21 may unconditionally copy the segment from the storage device 40 to the segment management cabinet 30A with respect to the data for which a data request has been given, or may acquire access frequencies within a certain time period and prioritize the copying of a segment having a high access frequency.

The analysis necessity determination unit 22 determines whether to cause the relevance analysis unit 23 to analyze the relevance based on a relationship between the data request and the segment. The relevance analysis unit 23 analyzes the relevance with respect to data, for which a data request input to the input output management unit 21 is added to a relevance saving cabinet 30B stored in the memory device 30 of a self-node and another node, and determines the segment based on the analysis result. The segment arrangement unit 24 updates the allocation of the segment according to the determination of the relevance analysis unit 23. Details of process contents of the analysis necessity determination unit 22, the relevance analysis unit 23, and the segment arrangement unit 24 are described below.

### (Specific Example of Data Changes)

In the following, a description is given of how the data stored in the segment management cabinet 30A and the relevance saving cabinet 30B changes according to a data request input to the input output management unit 21.

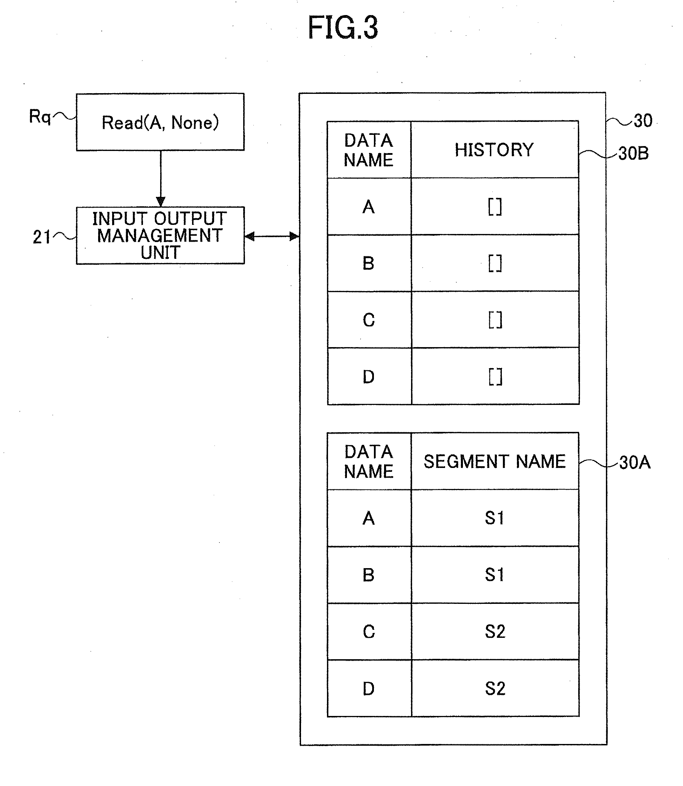

FIG. 3 illustrates a state where a data request Rq is made to the data management device 1. In the state of FIG. 3, Read(A, None), i.e., a request to read data A is made to the input output management unit 21.

Here, it is assumed that in the data request Rq input to the data management device 1, there is described information identifying the previous data requested by a previous data request by the same request source. For example, the information of the previous data may be recognized by the client computer 70 itself, or may be recognized by the data management device 1 side for each request source. In this case, the data management device 1 saves the history of data requests for each request source in one of the memory device 30, the register, etc.

The input output management unit 21 reads the data A from the segment management cabinet 30A and outputs the data A to the request source.

Furthermore, the input output management unit 21 updates the relevance saving cabinet 30B by referring to the information of the previous data. In the state of FIG. 3, a previous value 30C is None, i.e., does not exist, and therefore the input output management unit 21 does not update the relevance saving cabinet 30B.

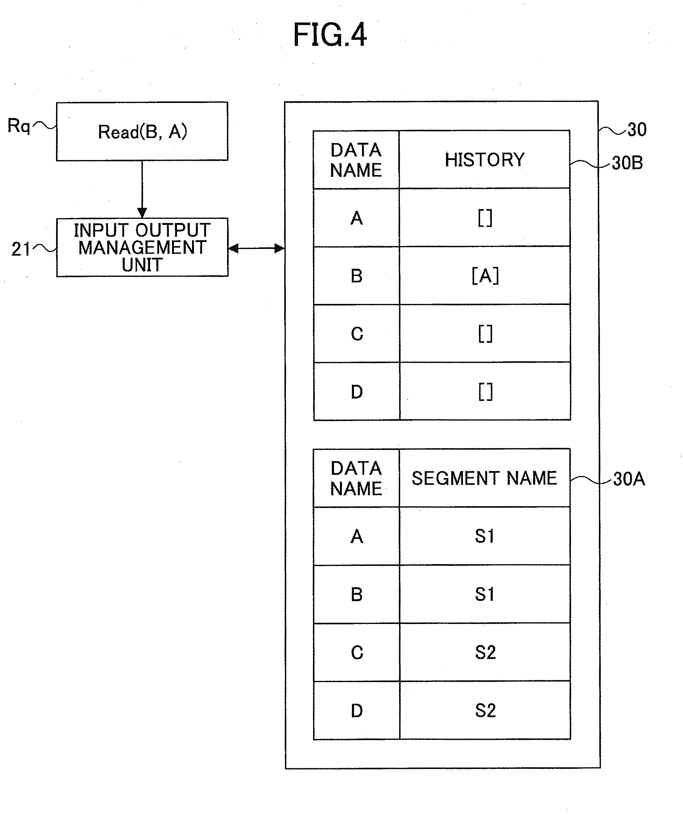

FIG. 4 illustrates a state in which a data request Rq is made to the data management device 1, after the state of FIG. 3. In FIG. 4, Read(B,A), i.e., a request to read data B, is made to the data management device 1 from the same request source as that of FIG. 3 (the same applies hereafter). The previous data is A.

The input output management unit 21 reads the data B from the relevance saving cabinet 30B, and sends the data B to the request source.

Furthermore, the input output management unit 21 refers to the previous data and updates the relevance saving cabinet 30B. In the state of FIG. 4, the previous data is A, and therefore the input output management unit 21 writes a value indicating data A once, in the field of the current data, i.e., B, in the relevance saving cabinet 30B.

When the relevance saving cabinet 30B is updated, the analysis necessity determination unit 22 determines whether relevance analysis by the relevance analysis unit 23 is needed. In the state of FIG. 4, the current data B and the previous data A belong to the same segment S1, and therefore the analysis necessity determination unit 22 determines that relevance analysis is not needed.

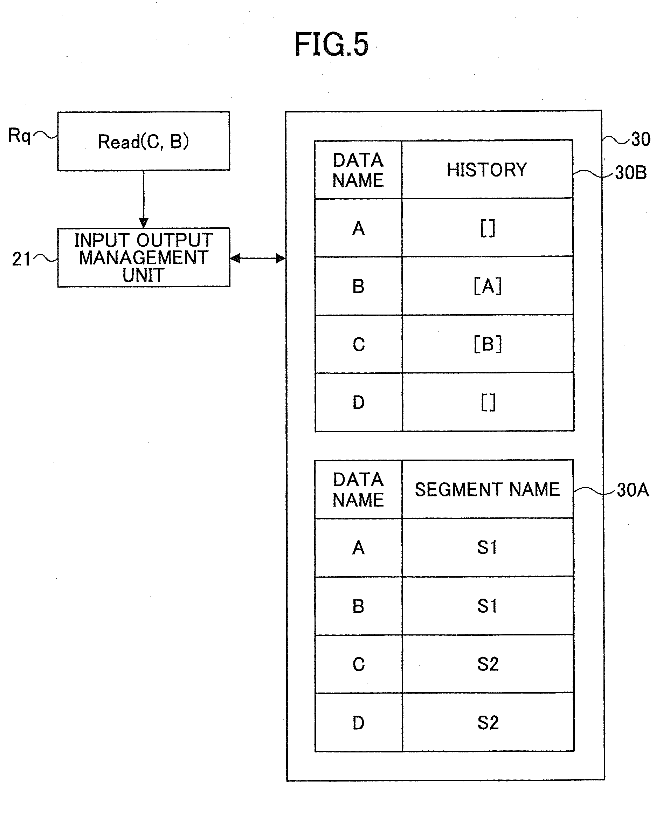

FIG. 5 illustrates a state in which a data request Rq is made to the data management device 1, after the state of FIG. 4. In FIG. 5, Read(C,B), i.e., a request to read data C, is made to the data management device 1. The previous data is B.

The input output management unit 21 reads the data C from the relevance saving cabinet 30B, and sends the data C to the request source.

Furthermore, the input output management unit 21 refers to the previous data and updates the relevance saving cabinet 30B. In the state of FIG. 5, the previous data is B, and therefore the input output management unit 21 writes a value indicating data B once, in the field of the current data, i.e., C, in the relevance saving cabinet 30B.

When the relevance saving cabinet 30B is updated, the analysis necessity determination unit 22 determines whether relevance analysis by the relevance analysis unit 23 is needed. In the state of FIG. 5, the current data C and the previous data B belong to different segments, and therefore the analysis necessity determination unit 22 determines that relevance analysis is needed.

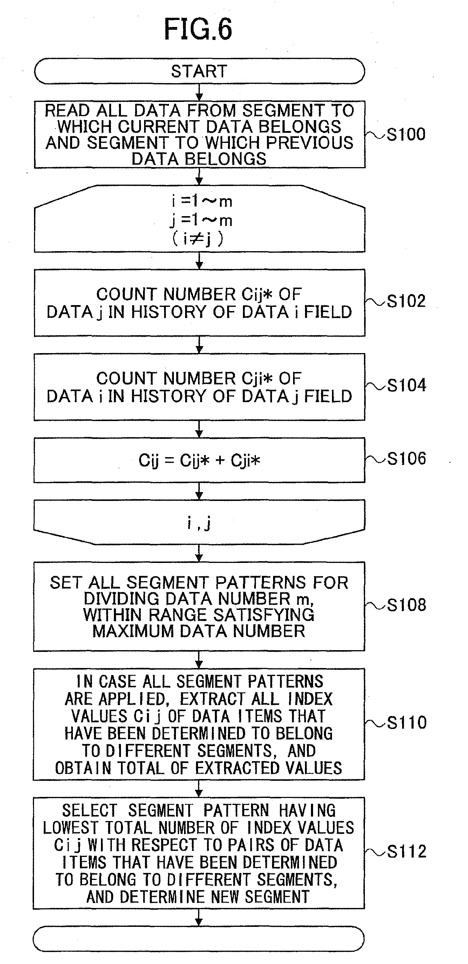

For example, the relevance analysis unit 23 analyzes the relevance between data by using a graph division method. FIG. 6 is an example of a flowchart indicating the flow of a relevance analysis process executed by the relevance analysis unit 23.

First, the relevance analysis unit 23 reads all of the data included in both the segment to which the current data belongs and the segment to which the previous data belongs (step S100).

Next, the relevance analysis unit 23 extracts the two data items i, j from the read data, and performs the processes of steps S102 through S106 for all of the combinations of i, j (i≠j). In FIG. 6, m is the number of types of data read in step S100.

The relevance analysis unit 23 counts the number Cij* of data items j in the history of the data i field stored in the relevance saving cabinet 30B of the node (10#1, 10#2) that is the current target (step S102).

Next, the relevance analysis unit 23 counts the number Cji* of data items i in the history of the data j field stored in the relevance saving cabinet 30B of the node that is the current target (step S104).

Next, the relevance analysis unit 23 adds Cij* with Cji*, and calculates an index value Cij indicating the relevance of data i and j (step S106).

When the relevance analysis unit 23 has performed the processes of steps S102 through S106 for all of i, j, the relevance analysis unit 23 sets all of the segment patterns for dividing the data number m, within a range satisfying the maximum data number (for example, three) within a segment (step S108). In the example of FIG. 5, the number of data items is four, and assuming that the maximum data number is three, there are four segment patterns in a case where the data is divided as 3:1, and there are six segment patterns in a case where the data is divided as 2:2, and therefore a total of 10 segment patterns are set.

Next, in a case where all segment patterns are applied, the relevance analysis unit 23 extracts all of the index values Cij of data items that have been determined to belong to different segments, and obtains the total of the extracted values (step S110).

Then, the relevance analysis unit 23 selects a segment pattern having the lowest total number of index values Cij with respect to the pairs of data items that have been determined to belong to different segments, and determines a new segment (step S112).

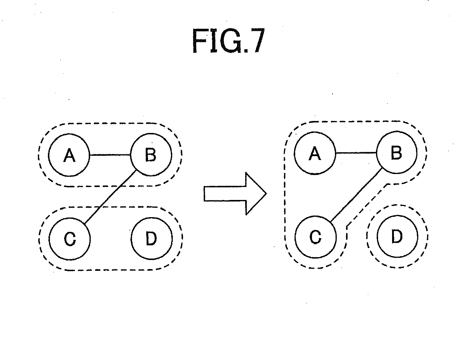

FIG. 7 illustrates segment arrangements before and after the relevance analysis unit 23 changes the segments in the state of FIG. 5. In FIG. 7, the side on the source of the arrow indicates the segments before the change, and the side on the end of the arrow indicates the segments after the change. In FIG. 7, the number of solid lines connecting (joining) data A, data B, etc., corresponds to the index value ij, and the dashed lines indicate the boundary lines of the segments. The "total number of index values Cij with respect to the pairs of data items that have been determined to belong to different segments" described above corresponds to the number of joining lines that are cut, when the index value Cij is deemed to be the number of virtual joining lines. In the case of FIG. 7, the number of solid lines that are cut by the boundary lines of the segment {A, B, C} and the segment {D} is zero, and therefore it is known that the total number of index values Cij by this segment division is zero.

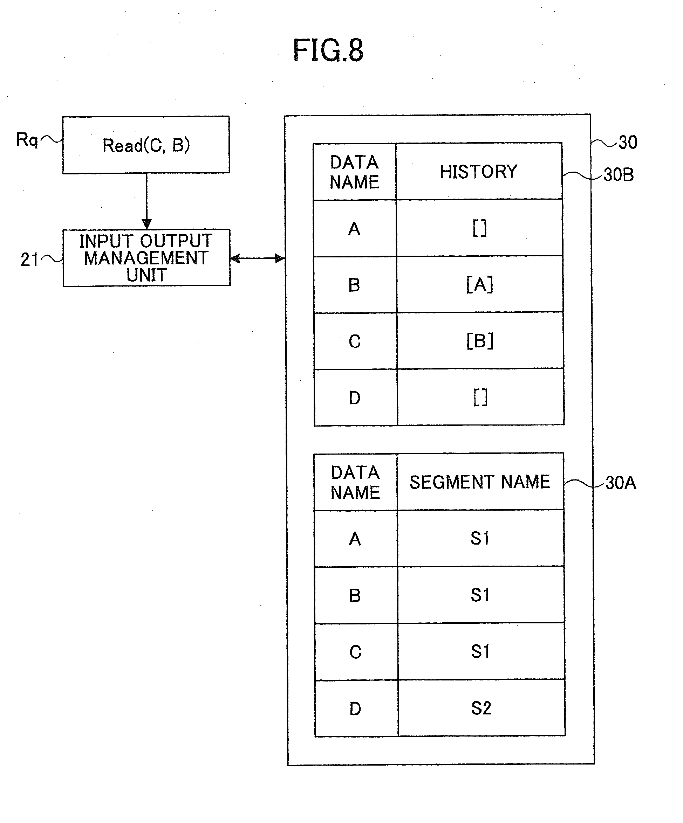

When the relevance analysis unit 23 determines a new segment, the segment arrangement unit 24 changes the association of the data and the segments. FIG. 8 illustrates the association of the data and the segments, after the change has been made by the segment arrangement unit 24.

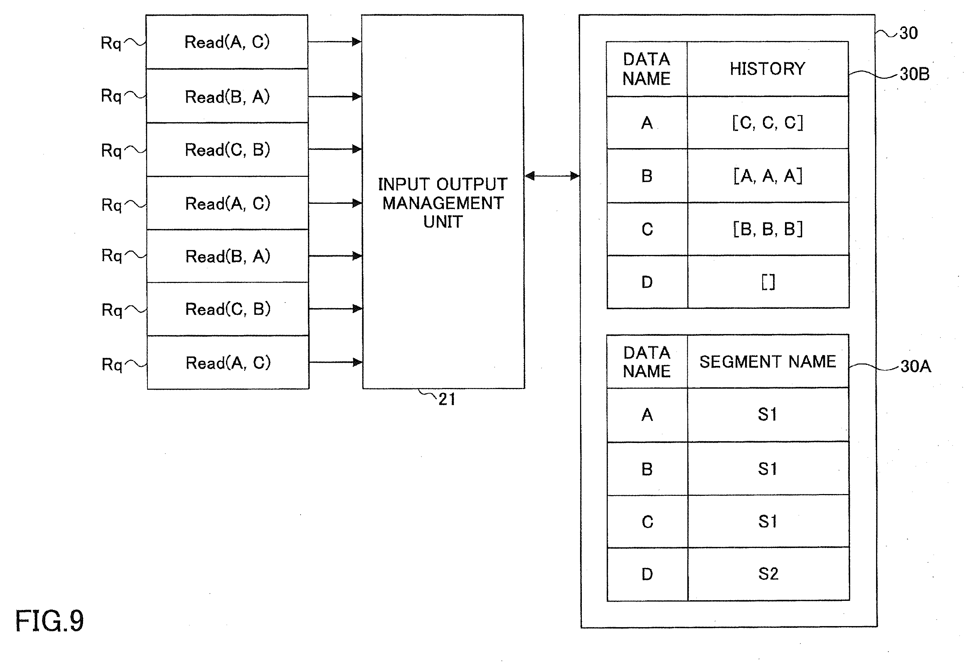

FIG. 9 illustrates a state when data requests Rq have been made to the data management device 1 a plural number of times, after the state of FIG. 8. By the data requests Rq illustrated in FIG. 9, the current data and the previous data belong to the same segment in any case, and therefore the relevance saving cabinet 30B is merely updated, and the relevance analysis or the changing of the association of the data and the segments are not performed.

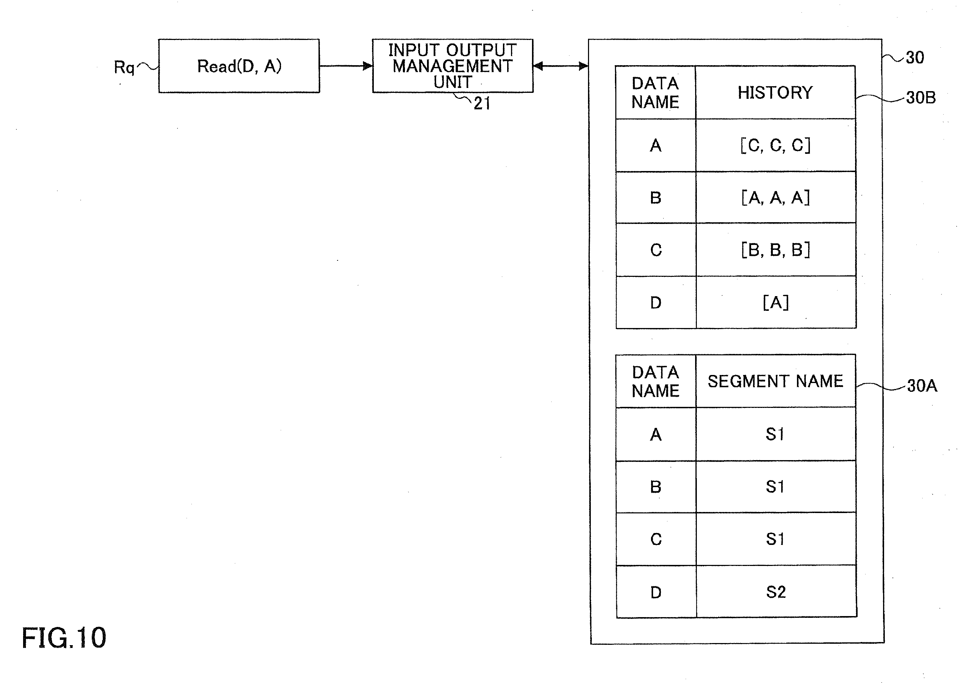

FIG. 10 illustrates a state when a data request Rq has been made to the data management device 1, after the state of FIG. 9. In this state, the analysis necessity determination unit 22 determines that relevance analysis is needed, because the current data D and the previous data A belong to different segments.

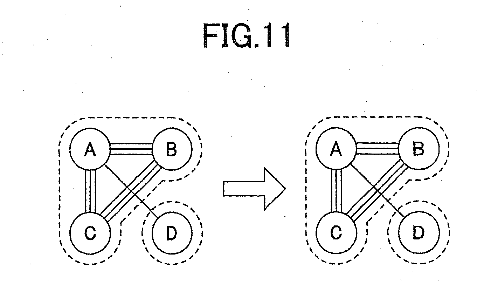

In the state of FIG. 10, a plurality of history items have already been stored in the relevance saving cabinet, among the data items A, B, and C. Therefore, the index value Cij between A-B, between A-C, and between B-C are calculated as relatively high values, and the index value Cij between A-D is calculated as a relatively low value. As a result, as illustrated in FIG. 11, the relevance analysis unit 23 does not change the association of the data and the segments. FIG. 11 illustrates the segment arrangement before and after the relevance analysis unit 23 determines the segments in the state of FIG. 10.

### (Overall Process Flow)

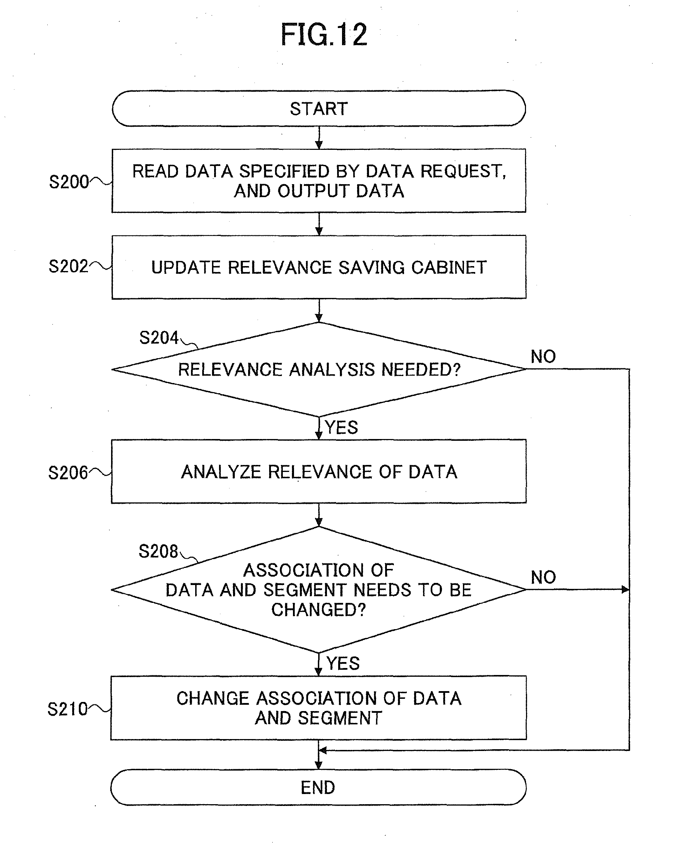

FIG. 12 is an example of a flowchart that indicates the flow of a process executed by the data management device 1. This flowchart is executed every time a data request is made to the data management device 1.

First, the input output management unit 21 reads the data specified by the data request from the memory device 30 or the storage device 40, and sends the data to the request source (S200).

Next, the input output management unit 21 refers to the previous data included in the data request, and update the relevance saving cabinet 30B (S202).

When the relevance saving cabinet 30B is updated, the analysis necessity determination unit 22 determines whether relevance analysis by the relevance analysis unit 23 is needed (step S204). When it is determined that relevance analysis is not needed, the data management device 1 ends the process of this flowchart.

When it is determined that relevance analysis is needed, the relevance analysis unit 23 analyzes the relevance of the data (S206).

Next, the segment arrangement unit 24 determines whether the association of the data and the segments needs to be changed, based on the analysis result of the relevance analysis unit 23 (step S208). When it is determined that the association of the data and the segments does not need to be changed, the data management device 1 ends the process of the this flowchart.

When it is determined that the association of the data and the segments needs to be changed, the segment arrangement unit 24 changes the association of the data and the segments (step S210).

### (Comparison with Reference Method)

In the following, a description is given of a comparison between the process performed by the data management device 1 according to the present embodiment and a process performed by a reference method in which the data is not managed in units of segments. Generally, the memory device 30 such as a RAM and a flash memory may be accessed at high speed compared to the storage device 40 such as a HDD, but then again the memory device 30 often has a small storage capacity. Therefore, it may be possible to perform a process of increasing the response speed, by storing the original data in the storage device 40, and storing data having a high access frequency in the memory device 30 according to need.

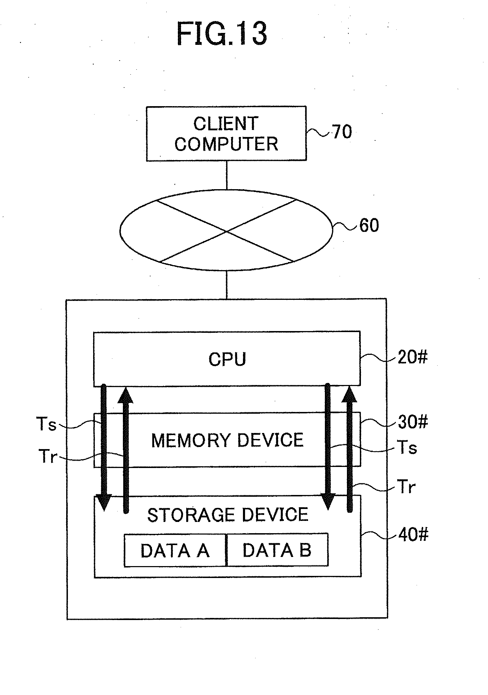

FIG. 13 schematically illustrates how a process is performed by the reference method in a non-dispersive data management device. In the reference method, for example, in order to level-load the number of data items, the storage location of the data is determined based on a hash value, etc., of the data. As a result, regardless of the relevance between the data items, the data is dispersively allocated, and therefore a device using the reference method may be unable to perform a process of efficiently storing the data in the memory device 30. In the example of FIG. 13, assuming that data A, B are stored only in the storage device 40, the seek time Ts and the read time Tr of data A, and the seek time Ts and the read time Tr of data B, are respectively needed. As a result, a total time of 2Ts+2Tr is needed. The seek time Ts is the time needed for searching the memory device 30 and the storage device 40, which is a fixed time of approximately 10 [msec], for example. Furthermore, the read time Tr is the time needed for reading the data from the storage device 40, and is a time of approximately 10 [msec] per 1 MB, for example. The time of reading data from the memory device 30 is sufficiently less than these times. When the data A, B are accessed, the data A, B are output to the client computer 70, and then copied in the memory device 30; however, with respect to the current data request, the seek time Ts and the read time Tr are needed with respect to both data A and data B.

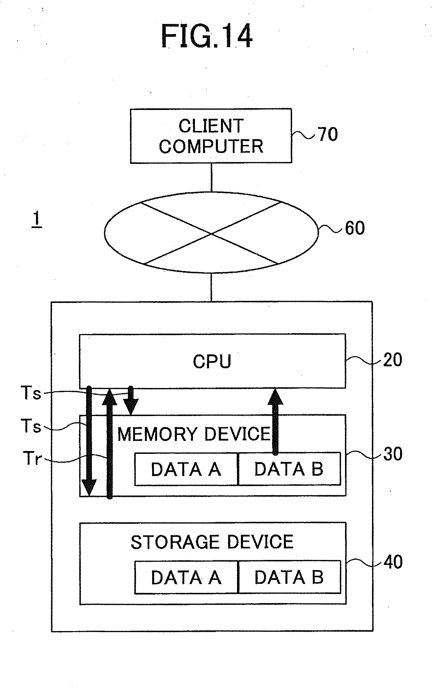

Conversely, in the data management device 1 according to the present embodiment, data A, B having relevance are managed as the same segment, and therefore when reading data A from the storage device 40, data A, B are stored in the memory device 30 by the whole segment. FIG. 14 schematically illustrates how a process is performed on the data A, B by the data management device 1 according to the present embodiment.

In the present embodiment, a seek time Ts and a read time Tr are needed to output data A; however, as the segment including data A, B is copied to the memory device 30 when outputting the data A, there is no need for a time corresponding to the read time Tr when outputting data B. Therefore, the time needed for outputting both data A and data B is approximately 2Ts+Tr, and it is possible to output the requested data at a high speed compared to the reference method.

### (Overview)

According to the data management device, the data management method, and the data management program of the present embodiment described above, it is possible to output the requested data at high speed.

Furthermore, according to the information processing device according to the present embodiment described above, information identifying the previous data is attached to the currently-requested data and sent to the data management device, and therefore it is possible to output the requested data to the data management device at high speed.

### <Second Embodiment>

In the following, with reference to drawings, a description is given of a data management device, a data management method, a data management program, and an information processing device according to a second embodiment of the present invention.

### (Hardware Configuration)

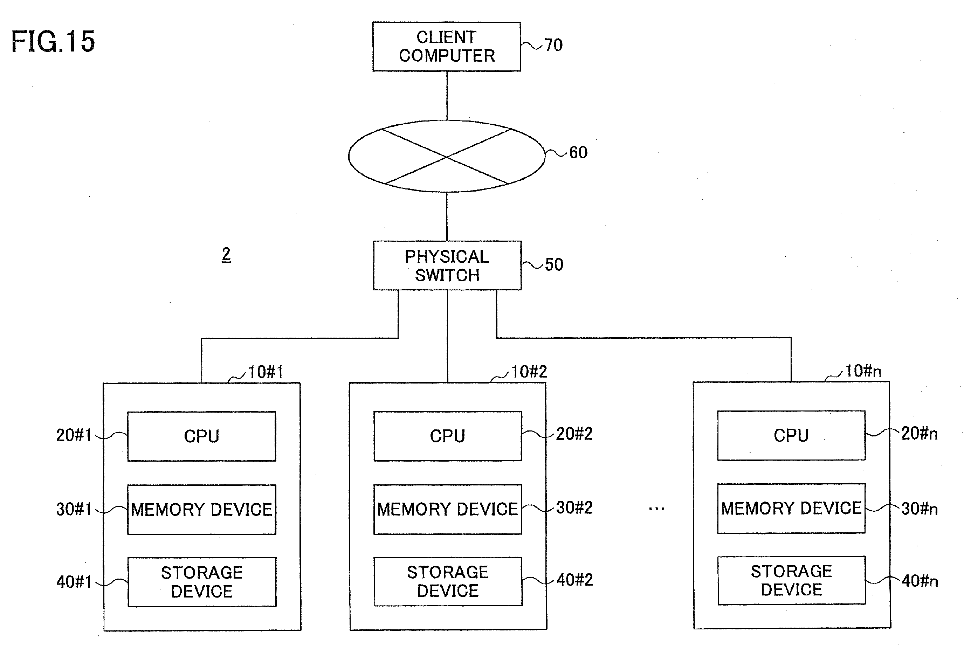

FIG. 15 illustrates a hardware configuration example of a data management device 2 according to the second embodiment of the present invention. The data management device 2 is a dispersive data management device having a mode as illustrated. The data management device 2 includes a plurality of nodes 10#1, 10#2, ... 10#n, and these nodes are connected via a physical switch 50, etc. There is no particular limit to the number of nodes. Between the physical switch 50 and the respective nodes, communication is performed based on, for example, TCP/IP (Transmission Control Protocol/Internet Protocol). To the physical switch 50, for example, a client computer 70, etc., which is an example of the information processing device, is connected via a network 60.

The node 10#1 includes, for example, a CPU 20#1, a memory device 30#1, and a storage device 40#1. Similarly, the node 10#2 includes, for example, a CPU 20#2, a memory device 30#2, and a storage device 40#2, and the node 10#n includes, for example, a CPU 20#n, a memory device 30#n, and a storage device 40#n.

In the following, when a description is given without distinguishing the nodes, the reference numeral beyond # is omitted, which is the identifier of the node.

The CPU 20 is a processor acting as an arithmetic processing unit including, for example, a program counter, an instruction decoder, various computing units, an LSU, a general-purpose register, etc.

The memory device 30 is a storage device that may be accessed at high speed compared to the storage device 40. As a combination of the memory device 30 and the storage device 40, similar to the first embodiment, combinations of a RAM, a flash memory, a HDD, etc., may be used.

The storage device 40 stores data provided by the data management device 2 in units of segments. A segment is a group of data acknowledged as having relevance based on the history of data requests, and as described below, the contents of the segment are updated by processes by the CPU 20.

In the memory device 30, for example, a segment that is highly frequently accessed, among the segments stored in the storage device 40, is copied from the storage device 40. Accordingly, the data management device 2 is able to output data at high speed in response to an input data request.

The node 10 includes a NIC (Network Interface Card) for communicating with the physical switch 50, a ROM storing BIOS (Basic Input/Output System), a program memory, etc., in addition to the above configuration. The program executed by the CPU 20 may be acquired via the network 60 or may be acquired by inserting a portable memory in the data management device 2.

### (Functional Configuration)

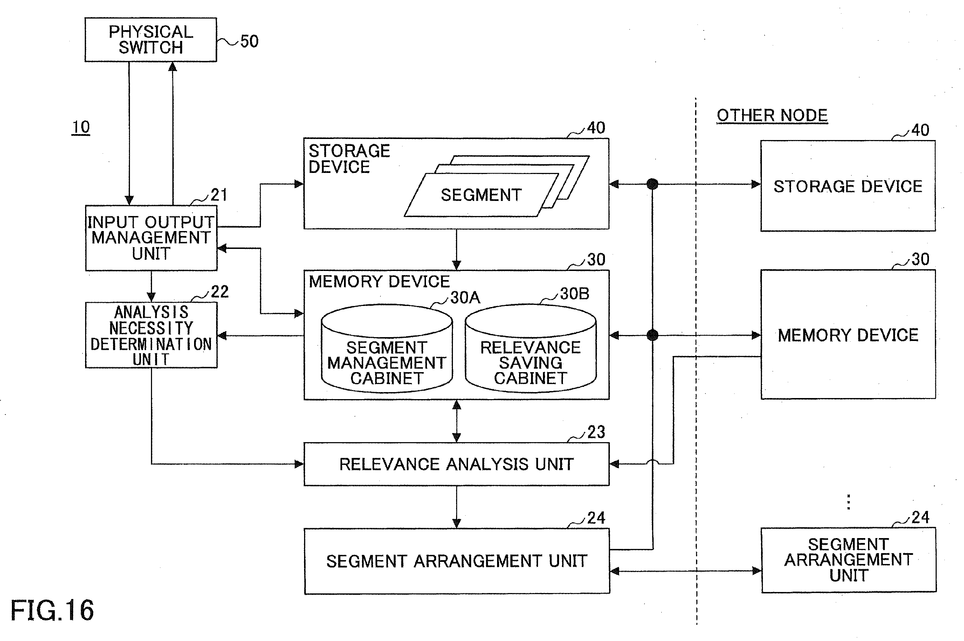

FIG. 16 illustrates a functional configuration example of the data management device 2 according to the second embodiment of the present invention. Each node 10 includes, as function units that function as programs are executed by the CPU 20, an input output management unit 21, an analysis necessity determination unit 22, a relevance analysis unit 23, and a segment arrangement unit 24.

The input output management unit 21 searches the memory device 30 and the storage device 40 in response to a data request input from the physical switch 50, and outputs the requested data to the physical switch 50. The data request is, for example sent from the client computer 70 to the data management device 2. Note that the data request is not only sent by the client computer 70; there may be cases where the entity of the a process, etc., being executed in the node 10, is the issue source of the data request. Furthermore, if an input output device is connected to the data management device 2, there may be cases where the user inputs a data request in the input output device.

When the client computer 70 sends a data request to the data management device 2, for example, the physical switch 50 transfers the data request to each of the nodes 10 by broadcast transmission. The input output management unit 21 of each node 10 first searches the memory device 30, and when there is data corresponding to the data request in the memory device 30, the input output management unit 21 reads the data from the memory device 30 and returns the data to the physical switch 50. Furthermore, when there is no data corresponding to the data request in the memory device 30, the input output management unit 21 searches the storage device 40, and when there is data corresponding to the data request in the storage device 40, the input output management unit 21 reads the data from the storage device 40 and returns the data to the physical switch 50. The physical switch 50 transfers the data, which is received from each of the nodes, to the client computer 70. At this time, the input output management unit 21 copies the segment to which the read data belongs from the storage device 40 to the segment management cabinet 30A of the memory device 30.

Note that the input output management unit 21 may unconditionally copy the segment from the storage device 40 to the segment management cabinet 30A with respect to the data for which a data request has been given, or may acquire access frequencies within a certain time period and prioritize the copying of a segment having a high access frequency.

The analysis necessity determination unit 22 determines whether to cause the relevance analysis unit 23 to analyze the relevance based on a relationship between the data request and the segment. The relevance analysis unit 23 analyzes the relevance with respect to data, for which a data request input to the input output management unit 21 is added to a relevance saving cabinet 30B stored in the memory device 30 of a self-node and another node, and determines the segment based on the analysis result. The segment arrangement unit 24 updates the allocation of the segment according to the determination of the relevance analysis unit 23. Details of process contents of the analysis necessity determination unit 22, the relevance analysis unit 23, and the segment arrangement unit 24 are described below.

### (Specific Example of Data Changes)

In the following, a description is given of how the data stored in the segment management cabinet 30A and the relevance saving cabinet 30B changes according to a data request input to the input output management unit 21.

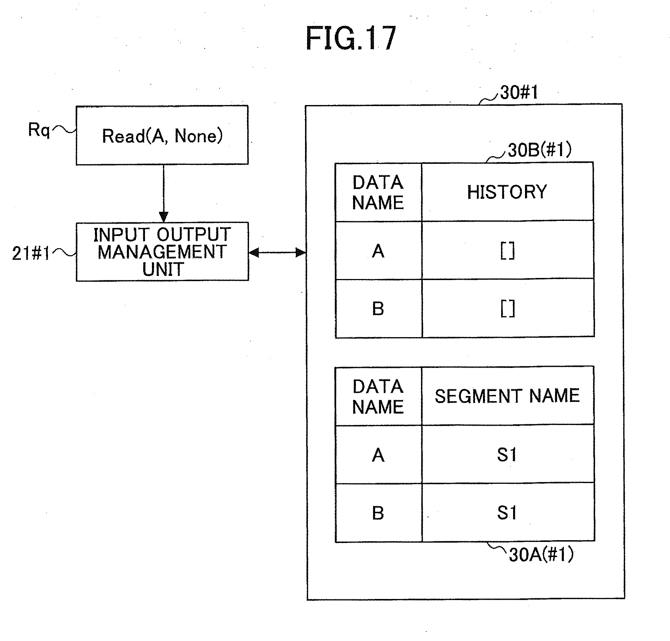

FIG. 17 illustrates a state where a data request Rq is made to the data management device 2. In this case, data A is stored in the memory device 30#1 of the node 10#1, and therefore the node 10#1 responds to the data request Rq. Note that it is assumed that in the data management device 2, the data that is stored in the memory device 30#1 is also stored in the storage device 40. When the data does not exist in the memory device 30 of any of the nodes 10, the node 10 whose storage device 40 includes the corresponding data, responds to the data request Rq.

In the state of FIG. 17, Read(A, None), i.e., a request to read data A, is made to the input output management unit 21#1.

Here, it is assumed that in the data request Rq input to the data management device 2, there is described information identifying the previous data (in the above case, "None", i.e., does not exist) requested by a previous data request by the same request source. For example, the information of the previous data may be recognized by the client computer 70 itself, or the physical switch 50 may identify the request source from a port number, an IP address, etc., and the information stored in an internal storage device may be given.

Furthermore, the information of the previous data may be recognized by the data management device 2 side for each request source. In this case, the data management device 2 saves the history of data requests for each request source in one of the memory device 30, the register, etc.

The input output management unit 21#1 reads the data A from the segment management cabinet 30A (#1) and outputs the data A to the physical switch 50.

Furthermore, the input output management unit 21#1 updates the relevance saving cabinet 30B (#1) by referring to the previous data. In the state of FIG. 17, a previous value 30C is None, i.e., does not exist, and therefore the input output management unit 21#1 does not update the relevance saving cabinet 30B (#1).

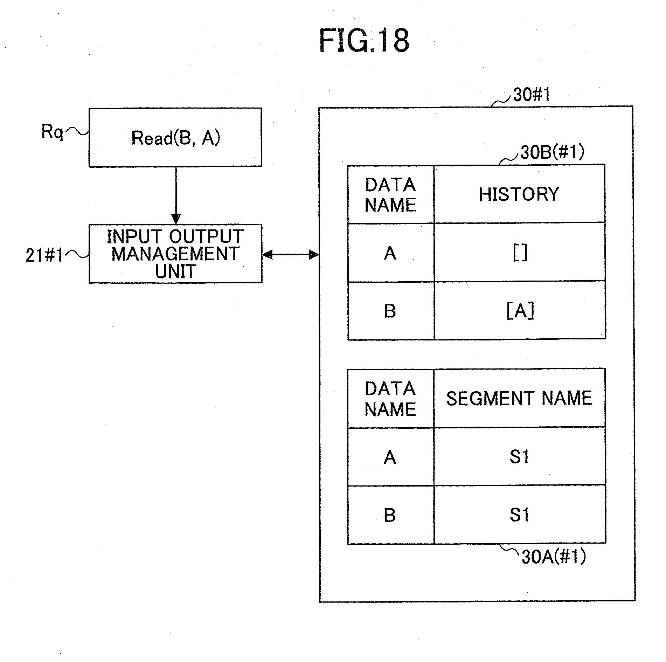

FIG. 18 illustrates a state in which a data request Rq is made to the data management device 1, after the state of FIG. 17. In FIG. 18, Read(B,A), i.e., a request to read data B, is made to the data management device 1 from the same request source as that of FIG. 17. In this case also, the data B is stored in the memory device 30#1 of the node 10#1, and therefore the node 10#1 responds to the data request Rq. The previous data is A.

The input output management unit 21#1 reads the data B from the segment management cabinet 30B (#1), and outputs the data B to the physical switch 50.

Furthermore, the input output management unit 21#1 refers to the previous data and updates the memory device 30 (#1). In the state of FIG. 18, the previous data is A, and therefore the input output management unit 21#1 writes a value indicating data A once, in the field of the current data, i.e., B, in the relevance saving cabinet 30B (#1).

When the relevance saving cabinet 30B (#1) is updated, the analysis necessity determination unit 22#1 determines whether relevance analysis by the relevance analysis unit 23#1 is needed. In the state of FIG. 18, the current data B and the previous data A belong to the same segment S1, and therefore the analysis necessity determination unit 22#1 determines that relevance analysis is not needed.

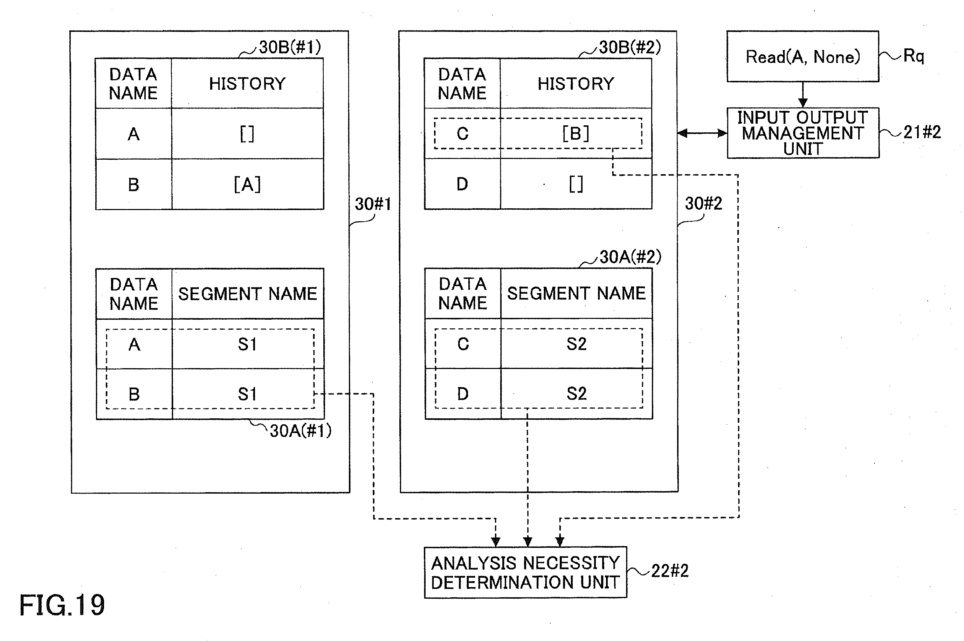

FIG. 19 illustrates a state in which a data request Rq is made to the data management device 2, after the state of FIG. 18. In FIG. 19, Read(C,B), i.e., a request to read data C, is made to the data management device 2. In this case also, the data C is stored in the memory device 30#2 of the node 10#2, and therefore the node 10#2 responds to the data request Rq. The previous data is B.

The input output management unit 21#2 reads the data C from the relevance saving cabinet 30B (#2), and outputs the data C to the physical switch 50.

Furthermore, the input output management unit 21#2 refers to the previous data and updates the relevance saving cabinet 30B (#2). In the state of FIG. 18, the previous data is B, and therefore the input output management unit 21#2 writes a value indicating data B once, in the field of the current data, i.e., C, in the relevance saving cabinet 30B (#1).

When the relevance saving cabinet 30B (#2) is updated, the analysis necessity determination unit 22#2 determines whether relevance analysis by the relevance analysis unit 23#2 is needed. In the state of FIG. 19, the current data C and the previous data B belong to different segments, and therefore the analysis necessity determination unit 22#2 determines that relevance analysis is needed.

For example, the relevance analysis unit 23#2 analyzes the relevance between data by using a graph division method. Because the relevance analysis by the relevance analysis unit 23#2 is the same as that of the first embodiment, reference is made to FIG. 6, and descriptions are omitted. Furthermore, the analysis results from the state illustrated in FIG. 19 are also the same as that of FIG. 7, and therefore descriptions are omitted.

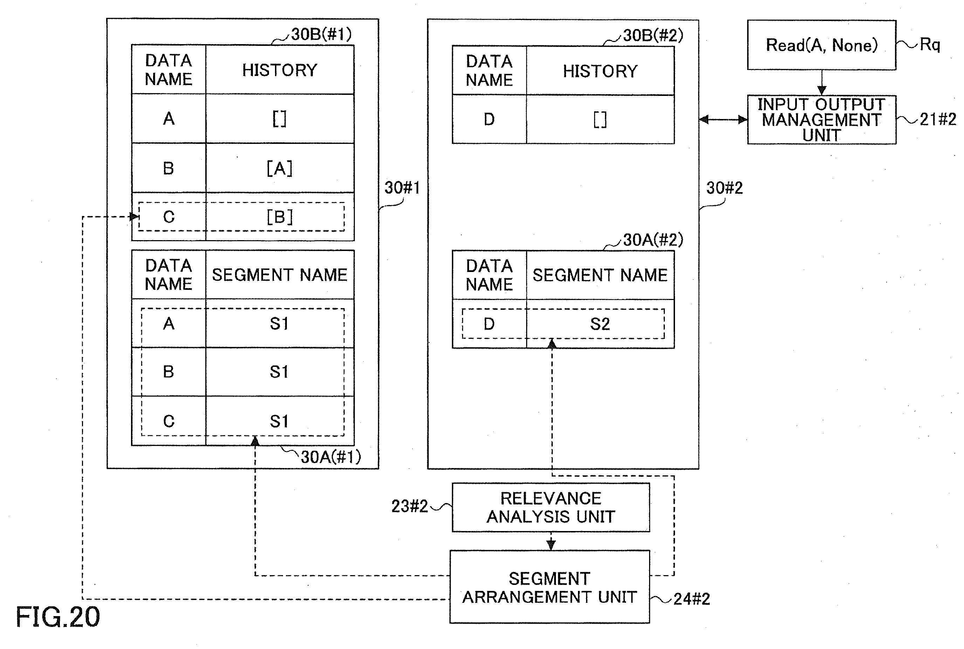

When the relevance analysis unit 23#2 determines a new segment, the segment arrangement unit 24#2 changes the arrangement of the segments, such that the data belonging to the same segment is stored in the same memory device 30. From the state illustrated in FIG. 19, the segment arrangement unit 24#2 changes the segment arrangement such that the segment {A, B, C} and the segment {D} are respectively stored together in the segment management cabinet 30A of the respective nodes 10. FIG. 20 illustrates a segment arrangement after being changed by the segment arrangement unit 24#2. Note that as the segment arrangement is changed, the segment arrangement unit 24#2 moves the stored history of data C stored in the relevance saving cabinet 30B#2 to the relevance saving cabinet 30B#1. In order to execute these changes/movements, the segment arrangement unit 24#2 sends request signals and data to the node 10#1.

The segment arrangement unit 24 may arbitrarily determine whether to store a segment in the memory device 30 of the self-node or to store a segment in the memory device 30 of another node, while following the above rule "data items belonging to the same segment are stored in the same memory device 30". Therefore, the segment arrangement unit 24 appropriately determines the arrangement of segments, for example, in consideration of the free space, etc., in the memory device 30 of each node 10.

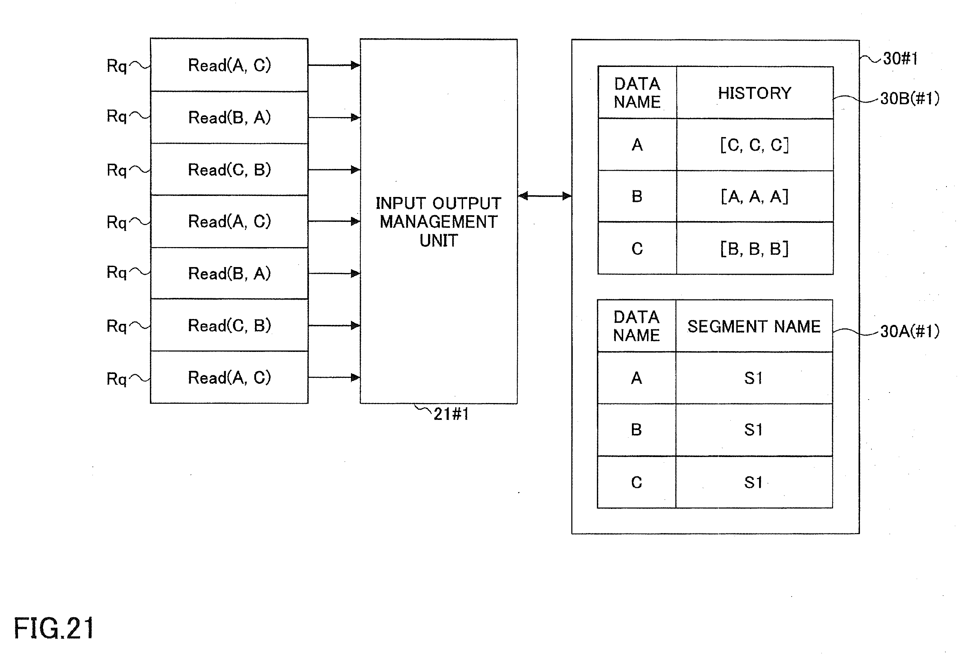

Furthermore, when the segment arrangement unit 24 changes the arrangement of segments in the memory device 30, the segment arrangement unit 24 also changes the arrangement of segments in the storage device 40, accordingly. In the state of FIG. 20, the segment arrangement unit 24 sends a request signal and data to the node 10#1, such that data C is stored in a segment S1 in the storage device 40#1. This process is performed because there may be cases where, when the access frequency to the segment S1 decreases in the node 10#1, the segment S1 is deleted from the memory device 30#1, and the segment S1 only exists in the storage device 40#1. Meanwhile, in the area where the data C is stored in the memory device 30#2, a rewritable flag, etc., is set, and the area is practically in a released state. FIG. 21 illustrates a state when data requests Rq have been made to the data management device 2 a plural number of times, after the state of FIG. 20. By the data requests Rq illustrated in FIG. 21, the current data and the previous data belong to the same segment in any case, and therefore the relevance saving cabinet 30B (#1) is merely updated, and neither the relevance analysis nor the changing of the segment arrangement are performed.

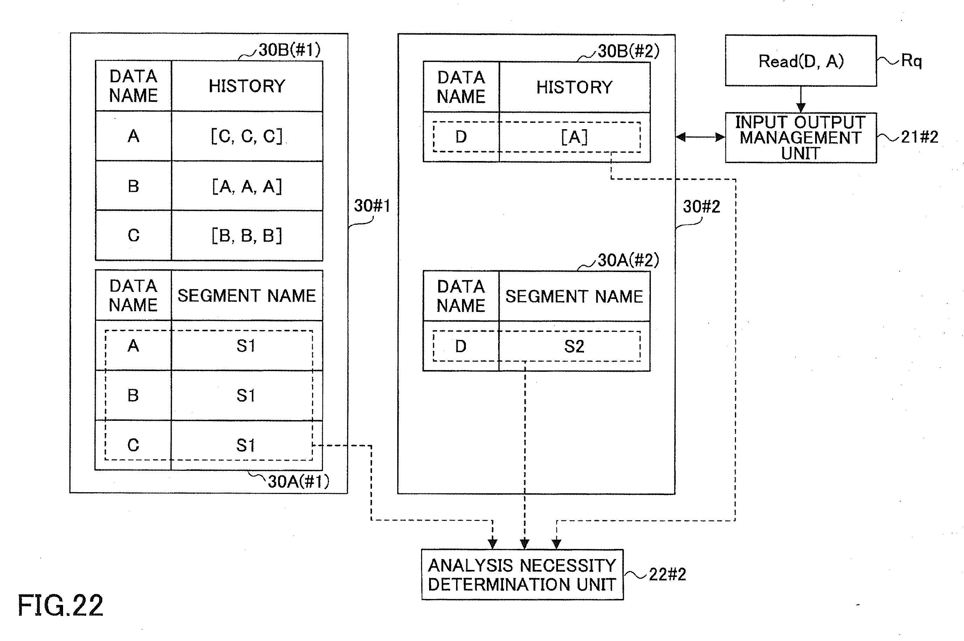

FIG. 22 illustrates a state when a data request Rq has been made to the data management device 2, after the state of FIG. 21. In this state, the analysis necessity determination unit 22#2 determines that relevance analysis is needed, because the current data D and the previous data A belong to different segments.

In the state of FIG. 22, a plurality of history items have already been stored in the relevance saving cabinet 30B (#1), among the data items A, B, and C. Therefore, the index value Cij between A-B, between A-C, and between B-C are calculated as relatively high values, and the index value Cij between A-D is calculated as a relatively low value. As a result, as illustrated in FIG. 11 of the first embodiment, the arrangement of the segment having the least number of joining lines, which are cut by the boundary lines of segments, has not changed from {A, B, C}-{D} before the relevance analysis unit 23#2 has performed the analysis, and therefore the relevance analysis unit 23#2 does not change the segments.

### (Overall Process Flow)

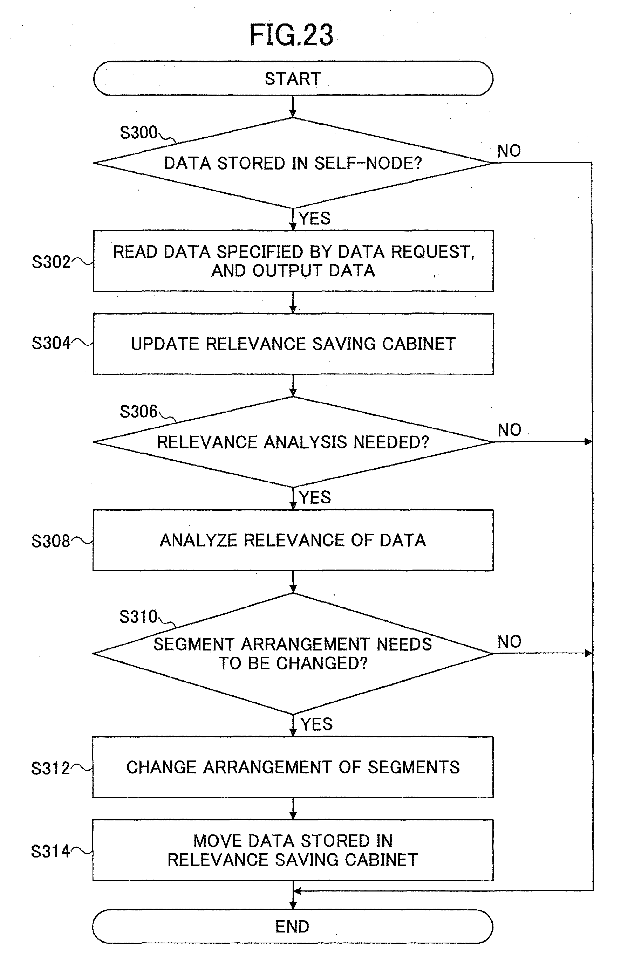

FIG. 23 is an example of a flowchart that indicates the flow of a process executed by each node 10. This flowchart is executed every time a data request is made to the data management device 1.

First, the input output management unit 21 determines whether the data (in the above description, the current data) specified by the data request, is stored in the memory device 30 or the storage device 40 of the self-node (S300). When the data specified by the data request is not stored in the memory device 30 or the storage device 40 of the self-node, the node 10 ends the process of the this flowchart.

When the data specified by the data request is stored in the memory device 30 or the storage device 40 of the self-node, the input output management unit 21 reads the data specified by the data request from the memory device 30 or the storage device 40, and outputs the data to the physical switch 50 (S302).

Next, the input output management unit 21 refers to the previous data included in the data request, and updates the relevance saving cabinet 30B (S304).

When the relevance saving cabinet 30B is updated, the analysis necessity determination unit 22 determines whether relevance analysis by the relevance analysis unit 23 is needed (S306). When it is determined that relevance analysis is not needed, the node 10 ends the process of the this flowchart.

When it is determined that relevance analysis is needed, the relevance analysis unit 23 analyzes the relevance of the data (S308).

Next, the segment arrangement unit 24 determines whether the segment arrangement needs to be changed, based on the analysis results by the relevance analysis unit 23 (S310). When it is determined that the segment allocation does not need to be changed, the node 10 ends the process of the this flowchart.

When it is determined that the segment arrangement needs to be changed, the segment arrangement unit 24 changes the arrangement of the segments, such that the data belonging to the same segment is stored in the same memory device 30 (S312). Furthermore, the segment arrangement unit 24 moves the data stored in the relevance saving cabinet 30B according to the change of the segment arrangement (S314).

### (Comparison with Reference Method)

In the following, a description is given of a comparison between the process performed by the data management device 2 according to the present embodiment and a process performed by a reference method in which the data is not managed in units of segments. Generally, the memory device 30 such as a RAM and a flash memory may be accessed at high speed compared to the storage device 40 such as a HDD, but then again the memory device 30 often has a small storage capacity. Therefore, it may be possible to perform a process of increasing the response speed, by storing the original data in the storage device 40, and storing data having a high access frequency in the memory device 30 according to need.

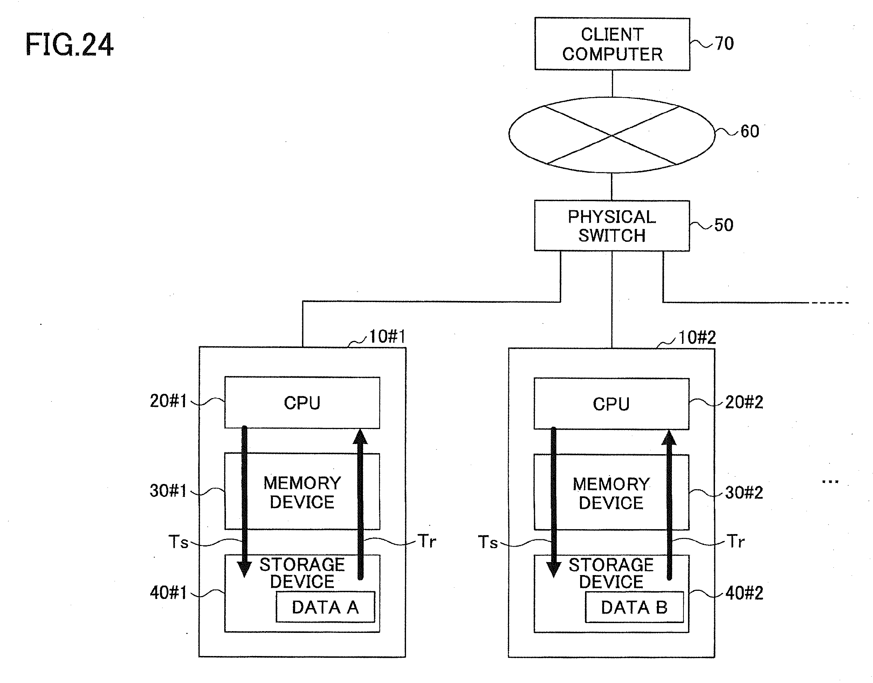

FIG. 24 schematically illustrates how a process is performed by the reference method in a dispersive data management device. In the reference method, for example, in order to level-load the number of data items, the storage location of the data is determined based on a hash value, etc., of the data. As a result, regardless of the relevance between the data items, the data is arranged in a distributed manner, and therefore a device using the reference method may be unable to perform a process of efficiently storing the data in the memory device 30. In the example of FIG. 24, assuming that data A, B are stored only in the storage devices 40#1, 40#2, respectively, the seek time Ts and the read time Tr of data A, and the seek time Ts and the read time Tr of data B, are respectively needed. As a result, a total time of 2Ts+2Tr is needed. The seek time Ts is the time needed for searching the memory device 30 and the storage device 40, and is a fixed time of approximately 10 [msec], for example. Furthermore, the read time Tr is the time needed for reading the data from the storage device 40, and is a time of approximately 10 [msec] per 1 MB, for example. The time of reading data from the memory device 30 is sufficiently less than these times. When the data A, B are accessed, the data A, B are output to the client computer 70, and then copied in the memory device 30; however, with respect to the current data request, the seek time Ts and the read time Tr are needed with respect to both data A and data B.

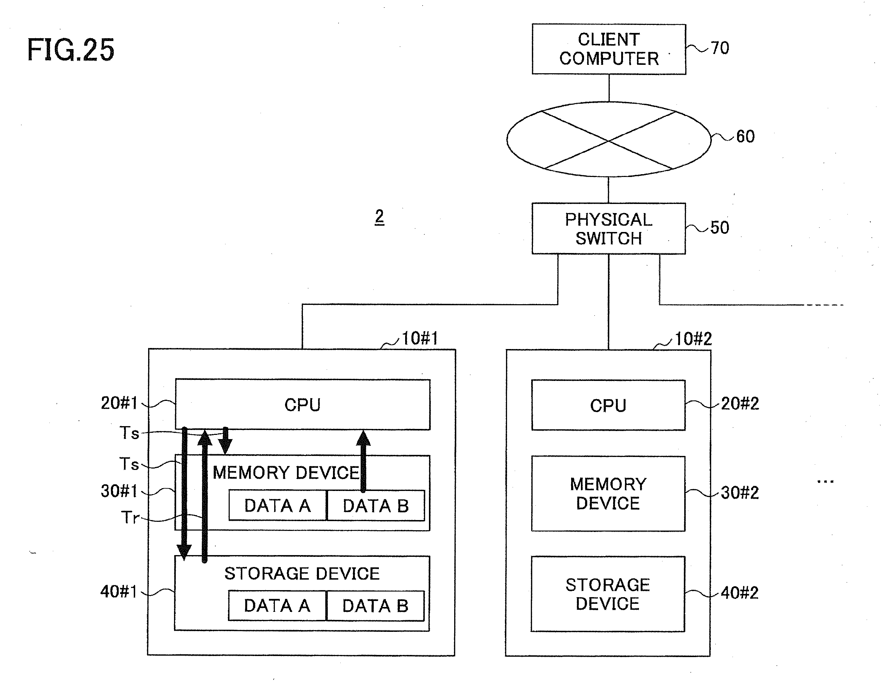

Conversely, in the data management device 2 according to the present embodiment, data A, B having relevance are managed as the same segment, and therefore when reading data A from the storage device 40, data A, B are stored in the memory device 30 by the whole segment. FIG. 25 schematically illustrates how a process is performed on the data A, B by the data management device 2 according to the present embodiment.

In the present embodiment, a seek time Ts and a read time Tr are needed to output data A; however, as the segment including data A, B is copied to the memory device 30 when outputting the data A, there is no need for a time corresponding to the read time Tr when outputting data B. Therefore, the time needed for outputting both data A, B is approximately 2Ts+Tr, and it is possible to output the requested data at a high speed compared to the reference method.

### (Overview)

According to the data management device, the data management method, and the data management program of the present embodiment described above, it is possible to output the requested data at high speed.

Furthermore, according to the information processing device according to the present embodiment described above, information by which the previous data may be identified is attached to the currently-requested data and sent to the data management device, and therefore it is possible to output the requested data to the data management device at high speed.

### <Other>

A description is given above of the best mode for carrying out the present invention by using embodiments; however, the present invention is not limited to the specific embodiments described herein, and various modifications and substitutions may be made without departing from the scope of the substance of the present invention.

For example, in the above embodiments, an example is given of the relevance analysis between data by the relevance analysis unit 23 in which focus is given on only the continuity of data requests; however, the relevance analysis is not so limited. For example, the relevance analysis unit 23 may recognize the time intervals between the data requests, and for example, the relevance analysis unit 23 may count the number of history items obtained by multiplying the inverse number of the time intervals, etc., and use a logic of calculating a high index value Cij between data items that are continuously requested within a short period of time. By this method, the relevance analysis unit 23 is capable of analyzing the relevance between data items more accurately. Furthermore, according to the same reason, exceptional processes may be performed such as not adding a data request to the relevance saving cabinet 30B when a certain amount of time has passed since the previous data request, and not adding a data request to the relevance saving cabinet 30B with respect to data requests that have been given around the time when the client computer 70 is shut down.

Furthermore, when handling data of a graph structure, the relevance analysis unit 23 may handle data items, which correspond to the link source and the link destination, as having relevance.

Furthermore, the data stored in the storage device 40 is managed in units of segments; there may be data that is stored as a single piece of data.

### INDUSTRIAL APPLICABILITY

The present invention may be used in the data providing service industry, the computer manufacturing industry, the computer software industry, etc.

### DESCRIPTION OF THE REFERENCE NUMBERS

- 1, 2: data management device
- 10: node
- 20: CPU
- 21: input output management unit
- 22: analysis necessity determination unit
- 23: relevance analysis unit
- 24: segment arrangement unit
- 30: memory device
- 30A: segment management cabinet
- 30B: relevance saving cabinet
- 40: storage device
- 50: physical switch
- 60: network
- 70: client computer

## Claims

1. A data management device (1, 2) comprising:
a first storage unit (40) configured to store data;
a second storage unit (30) configured to store data, to which access is possible at a high speed compared to the first storage unit;
an input output management unit (21) configured to read, from the first storage unit or the second storage unit, data according to an input data request, and output the read data;
an analysis unit (23) configured to analyze relevance between data items stored in the first storage unit or the second storage unit, based on history of data requests that have been input to the input output management unit, and divide, into groups, the data items stored in the first storage unit or the second storage unit based on a result of the analysis; and
a management unit (24) configured to store, in the second storage unit, the data items in units of the groups into which the data items have been divided by the analysis unit. (FIGS. 2, 16)

2. The data management device according to claim 1, wherein
the second storage unit includes a plurality of physical storage parts (30#1, 30#2, ..., 30#n), and
the management unit stores the data items belonging to the same group, in the same physical storage part. (FIG. 1)

3. The data management device according to claim 1 or 2, wherein
the management unit preferentially stores a group having a high access frequency in the second storage unit.

4. The data management device according to claim 1 or 2, wherein
the analysis unit totals a number of times a data request has been continuously made for the same pair of data items based on the history of the data requests that have been input to the input output management unit, and divides, into the groups, the data items stored in the first storage unit or the second storage unit, such that the totaled number of times becomes low with respect to a pair of data items that have been determined to belong to different groups as a result of the dividing into the groups. (FIGS. 6, 7, 11)

5. A data management method performed by a data management device including a first storage unit configured to store data and a second storage unit configured to store data, to which access is possible at a high speed compared to the first storage unit, the data management method comprising:
reading, from a first storage unit or a second storage unit, data according to an input data request, and outputting the read data;
analyzing relevance between data items stored in the first storage unit or the second storage unit, based on history of data requests that have been input, and dividing, into groups, the data items stored in the first storage unit or the second storage unit based on a result of the analysis; and
storing, in the second storage unit, the data items in units of the groups into which the data items have been divided. (FIGS. 12, 23)

6. The data management method according to claim 5, wherein
the second storage unit includes a plurality of physical storage parts, and
the process of storing, in the second storage unit, the data items in units of the groups into which the data items have been divided, includes storing the data items belonging to the same group, in the same physical storage part.

7. The data management method according to claim 5 or 6, wherein
the process of storing, in the second storage unit, the data items in units of the groups into which the data items have been divided, includes preferentially storing a group having a high access frequency, in the second storage unit.

8. The data management method according to claim 5 or 6, wherein
the process of dividing the data items into groups includes totaling a number of times a data request has been continuously made for the same pair of data items based on the history of the data requests that have been input, and dividing, into the groups, the data items stored in the first storage unit or the second storage unit, such that the totaled number of times becomes low with respect to a pair of data items that have been determined to belong to different groups as a result of the dividing into the groups.

9. A data management program that causes a data management device including a first storage unit configured to store data and a second storage unit configured to store data, to which access is possible at a high speed compared to the first storage unit, to execute:
reading, from a first storage unit or a second storage unit, data according to an input data request, and outputting the read data;
analyzing relevance between data items stored in the first storage unit or the second storage unit, based on history of data requests that have been input, and dividing, into groups, the data items stored in the first storage unit or the second storage unit based on a result of the analysis; and
storing, in the second storage unit, the data items in units of the groups into which the data items have been divided. (FIGS. 12, 23)

10. The data management program according to claim 9, wherein
the second storage unit includes a plurality of physical storage parts, and
the process of storing, in the second storage unit, the data items in units of the groups into which the data items have been divided, includes storing the data items belonging to the same group, in the same physical storage part.

11. The data management program according to claim 9 or 10, wherein
the process of storing, in the second storage unit, the data items in units of the groups into which the data items have been divided, includes preferentially storing a group having a high access frequency, in the second storage unit.

12. The data management program according to claim 9 or 10, wherein
the process of dividing the data items into groups includes totaling a number of times a data request has been continuously made for the same pair of data items based on the history of the data requests that have been input, and dividing, into the groups, the data items stored in the first storage unit or the second storage unit, such that the totaled number of times becomes low with respect to a pair of data items that have been determined to belong to different groups as a result of the dividing into the groups.

13. An information processing device (70) configured to make a data request to a data management device, by sending, to the data management device, information identifying data that has been previously requested together with data that is currently requested. (FIGS. 1, 15)
